# EUROPEAN PATENT APPLICATION

(11) **EP 3 943 445 A1**
(43) Date of publication of application: **26.01.2022**
(21) Application number: 20186968.2
(22) Date of filing: 21.07.2020
(51) Int. Cl.: C01B 21/06, C01B 21/064, C09K 11/77, H01G 11/50, H01M 4/58

(54) **BULK MATERIALS OF DOPED MULTINARY NITRIDES AND NITRIDOSILICATES, THEIR PRODUCTION METHOD AND USES**

(71) Applicant: Karlsruher Institut für Technologie, 76131 Karlsruhe (DE)
(72) Inventor: Braun, Cordula, 64291 Darmstadt (DE)
(74) Representative: Müller-Boré & Partner Patentanwälte PartG mbB

(57) **Abstract**

The present invention relates to a novel method for producing bulk materials of doped multinary nitrides or nitridosilicates of the following formula (1) MN:D^{X+}, (2) M₃N₄:D^{X+}, or (3) M'₂Si₅N₈:D^{X+}, bulk materials obtainable by this method as well as their use as phosphor materials. Further, the present invention also relates to novel use of bulk materials of doped multinary nitrides or nitridosilicates of the following formula (1) MN:D^{X+}, (2) M₃N₄:D^{X+}, or (3) M'2Si₅N₈:D^{X+}, or of bulk materials of undoped multinary nitrides or nitridosilicates of the following formula (1') MN, (2') M₃N₄, or (3') M'₂Si₅N₈ as electrode materials in energy storage systems.

## Description

The present invention relates to novel methods for producing bulk materials of doped multinary nitrides and nitridosilicates of the following formula (1) MN:D^{X+}, (2) M₃N₄:D^{X+}, or (3) M'₂Si₅N₈:D^{X+}, bulk materials obtainable by this method as well as their use as phosphor materials. Further, the present invention also relates to novel uses of bulk materials of doped multinary nitrides and nitridosilicates of the following formula (1) MN:D^{X+}, (2) M₃N₄:D^{X+}, or (3) M'₂Si₅N₈:D^{X+}, or of bulk materials of undoped multinary nitrides and nitridosilicates of the following formula (1') MN, (2') M₃N₄, or (3') M'₂Si₅N₈ as electrode materials in energy storage systems.

Numerous multinary nitrides and nitridosilicates and their related subgroups (e.g. oxonitridosilicates, nitridoalumosilicates and SiAlONs) represent today a rapidly growing field in materials chemistry. During the last few years, these compounds feature broad application as functional or structural materials, e.g. due to their exceptional chemical and physical stability in conjunction with nonlinear optical properties (second harmonic generation, SHG) or as highly efficient phosphors in modern LED technology upon doping with Ce³⁺ or Eu²⁺.

This wide-ranging applicability of nitridosilicates can be ascribed to their significantly extended structural varieties (SiN₄ tetrahedra: corner and edge sharing, with a large range for the degree of condensation N^{[1]} till N^{[4]}) compared with classical oxosilicates, where SiO₄ tetrahedra are only corner sharing and no edge sharing can be found. As summarized, for instance, in M. Zeuner at al., Angew. Chem. 2011, 123, 7898-7920, these specific structural features enable a more varied structural diversity as compared to oxosilicates and originate in superior material properties (e.g. mechanical hardness and stability) due to the higher covalency of the constituting chemical bonds and the higher degree of crosslinking in nitride structures in comparison to oxides.

The structural relationship to binary high-performance ceramics such as Si₃N₄ or AIN and the analogy with known high-pressure oxosilicates gave rise to comprehensive high-pressure investigations on nitrido- and oxonitridosilicates and their related nitrides. New high-pressure compounds like spinel-type γ-Si₃N₄ revealed that structures with condensed SiN₆ octahedra result in outstanding micro- and macroscopic material properties. The discovery of the latter triggered broad and versatile research efforts from both solid-state chemistry and materials research. Just recently, high-pressure investigations rendered possible the first nitridosilicate with sixfold coordinated Si (β-MgSiN₂).

Eu²⁺-doped nitridosilicates and oxonitridosilicates emerged as important host lattices for phosphor-converted light emitting diodes (pc-LEDs) due to their high chemical and thermal stability, their high quantum efficiency of the luminescence process and their very low thermal quenching. Namely M₂Si₅N₈:Eu²⁺ and MSi₂O₂N₂:Eu²⁺ (M = alkaline earth) have been employed as highly effective red-orange (M₂Si₅N₈:Eu²⁺) and yellow-green (MSi₂O₂N₂:Eu²⁺) phosphors, respectively.

Just recently, new Mg-nitridosilicates (Ca[Mg₃SiN₄]:Ce³⁺, Sr[Mg₃SiN₄]:Eu²⁺, Eu[Mg₃SiN]) and Mg-nitridoaluminates (M[Mg₂Al₂N₄]:Eu²⁺ with M = Ca, Sr, or Ba, and Sr[LiAl₃N₄]:Eu²⁺) raised up as next generation of red phosphor materials with superior luminescence properties.

Moreover, J. Heikenfeld et al., Appl. Phys. Lett. 1999, 75, 1189-1191, describe photo- and electroluminescence investigations of Eu-doped GaN thin films (2.4 µm) on Si grown by molecular beam epitaxy. That is, the doping of GaN with Eu was obtained during the main synthesis of GaN.

Most luminescent materials consist of a so-called host material to which certain dopant ions, also termed activators, are added. In such cases, the host lattice plays two distinct roles: as a passive matrix to define the spatial locations of the activator ions; and as an active participant in the luminescence process, exerting its own specific influence on the spectroscopic behavior of the activator ion. In the latter, it helps to shape the structure of the energy levels of the activator and also introduces vibrations of various energies, the so-called phonons, which influence the kinetics of the luminescence phenomena.

Luminescent phosphors are usually doped with Eu²⁺, for instance, and only one activator ion can be used for one specific host material. Therefore, one host commonly shows only one color. Thus, different host materials applied as thin films are commonly used to achieve different colors. Down conversion of blue light from InGaN LEDs by suitable color converters, especially phosphors, has become a dominant technique for producing white light for all kinds of applications but still has some technical challenges to overcome. However, using different host materials commonly leads to structural misfits. In particular, since the host materials can have different coefficients of thermal expansion and due to different grid bias voltages of the host materials, multicolor LEDs often suffer from such structural problems. Using one material for all colors would solve these difficulties.

Current battery technologies also suffer from a number of challenges, and search for novel high-performing electrode materials is still essential. In particular, the need to overcome the present limitations concerning capacities is a great topic.

Especially lithium nitridosilicates and nitrides play an upcoming role in the field of lithium-ion batteries and rechargeable solid-state batteries. As the energy demand these days is still increasing, powerful energy storage materials with high lithium-ion conductivity are of essential importance for the development of all-solid-state lithium batteries. Rechargeable lithium-ion batteries are a key technology for nearly all computing and telecommunication devices because of their high energy density, adjustable lightweight construction, and a longer lifetime than comparable battery technologies.

For instance, several studies concerning SiN_{0.89} thin films deposited by plasma enhanced chemical vapor deposition having long-term cyclability are described by A. Ulvestad et al., Sci. Rep., 2018, 8 (DOI 10.1038/s41598-018-26769-8). But these high capacities are based on the fact that Si is the main component. These studies do not at all include SiN or Si₃N₄.

In the quasi-binary system Li₃N-Si₃N₄ ternary lithium nitridosilicates are known. Furthermore, there have been reported several kinds of Li-Si-N compounds (LiSi₂N₃, Li₂SiN₂, Li₅SiN₃, Li₈SiN₄ and Li₁₈Si₃N₁₀), which all show lithium-ion conduction.

Since multinary lithium (oxo)nitridosilicates might be interesting candidates for solid-state electrolytes, comprehensive studies and structural elucidation of several lithium alkaline earth as well as lithium rare earth (oxo)nitridosilicates have been conducted. These systematic investigations led to the discovery of novel compounds covering the whole range of dimensionality of [SiN₄] building blocks varying from isolated groups over layered Si-N substructures up to three-dimensional frameworks. For instance, M. Martin-Gil et al., Mater. Lett. 2003, 57, 3063-3069, describe nanosized Si₃N₄ as an electrode material for lithium batteries, but only five cycles were presented, the total amount of lithium that reacted with Si₃N₄ was very small and no doping of Si₃N₄ has been shown.

Moreover, not only the field of nitridosilicates by studying the system Li₃N-Si₃N₄ was entered, but as well investigations on transition metal nitrides were initialized. This was the beginning of a streak of success of binary and ternary transition metal nitrides, which feature excellent manifold material properties e.g. as high temperature ceramics, magnetic materials, superconductors or catalysts, and have therefore been many times subject of investigations. Especially, the combination with lithium yielded simple but exceptional compounds with remarkable properties. Lithium (transition metal) nitrides turned out as sustainable energy materials displaying high ionic mobility and advanced materials for energy applications, being used either for lithium or hydrogen storage.

Li₃⁺N³⁻ has one of the highest ionic conductivities at room temperature (6 × 10⁻³ S cm⁻¹), but a low decomposition voltage (0.44 V), which makes it difficult to be used as an electrolyte for a solid lithium battery. However, when the lithium ions are partly substituted by transition metal ions (e.g. Fe, Co, Mn, Ni, Cu), the electrode properties and cycle performance improve remarkably. Several lithium transition metal nitrides (Li₇MnN₄ (200 mAh/g, 1.2 V vs. Li/Li⁺), Li₃FeN₂ (130 mAh/g, 1.2 V vs. Li/Li⁺), Li_{2.7}Fe_{0.3}N (550 mAh/g, 0.05-1.3 V vs. Li/Li⁺), Li_{2.6}Co_{0.4}N (700-900 mAh/g, 0.6 V vs. Li/Li⁺), Li₂₅Ni_{0.5}N (400 mAh/g, 0.6 V vs. Li/Li⁺) and Li_{2.5}Cu_{0.5}N (400 mAh/g, 0.6 V vs. Li/Li⁺) show reversible lithium deintercalation and reintercalation and turned out as a promising group of anode materials for lithium secondary batteries. Still, further improvements are necessary.

Based on the above, the object of the present invention is to provide a novel material for highly efficient phosphors in modern LED-technology and for highly efficient electrode materials in energy storage systems.

According to the present invention, the above object is achieved by providing a method for producing a bulk material of a doped multinary nitride or nitridosilicate of the following formula (1) MN:D^{X+}, (2) M₃N₄:D^{X+}, or (3) M'₂Si₅N₈:D^{X+} as characterized in claim 1. The above object is also achieved by a bulk material of a doped multinary nitride or nitridosilicate of the following formula (1) MN:D^{X+}, (2) M₃N₄:D^{X+}, or (3) M'₂Si₅N₈:D^{X+} obtainable by the method according to the present invention as well as by a bulk material of a multinary nitridosilicate of the following formula Co₂Si₅N₈ as characterized in claims 7 and 8, respectively. In addition, the above object is achieved by using a bulk material of a doped multinary nitride or nitridosilicate of the following formula (1) MN:D^{X+}, (2) M₃N₄:D^{X+}, or (3) M'₂Si₅N₈:D^{X+} having at least one dopant (D^{X+}) as a phosphor material in light-emitting diodes (LEDs) as characterized in claim 9. Moreover, the above object is achieved by providing a multicolored light-emitting diode as characterized in claim 12. Furthermore, the above object is achieved by using a bulk material of a doped multinary nitride or nitridosilicate of the following formula (1) MN:D^{X+}, (2) M₃N₄:D^{X+}, or (3) M'₂Si₅N₈:D^{X+}, or of a bulk material of an undoped multinary nitride or nitridosilicate of the following formula (1') MN, (2') M₃N₄, or (3') M'₂Si₅N₈ as an electrode material in energy storage systems as characterized in claim 13. Preferred embodiments of the present invention are set out in the dependent claims.

Specifically, the present invention provides a method for producing a bulk material of a doped multinary nitride or nitridosilicate of the following formula (1) MN:D^{X+}, (2) M₃N₄:D^{X+}, or (3) M'₂Si₅N₈:D^{X+}. Hereinafter, the doped multinary nitride and nitridosilicate of the formulae (1) MN:D^{X+}, (2) M₃N₄:D^{X+} and (3) M'₂Si₅N₈:D^{X+} will be also simply referred to as nitrides and nitridosilicates of the formulae (1), (2) and (3).

According to the present invention, the method comprises a step of providing a bulk material of a multinary nitride or nitridosilicate of the following formula (1') MN, (2') M₃N₄, or (3') M'₂Si₅N₈, and a step of doping the bulk materials of the multinary nitride or nitridosilicate with at least one dopant (D^{X+}) at an elevated temperature of at least 400°C. According to the present invention, M in the above formula (1) MN:D^{X+} or (2) M₃N₄:D^{X+} is at least one element selected from the group consisting of B, C, Al, Si, Ca, Cu, Ga, Ge, In, Sn, and Pb, whereas M' in the above formula (3) M'₂Si₅N₈:D^{X+} is at least one element selected from the group consisting of alkaline earth metals, transition metals, and lanthanoids, and the at least one dopant (D^{X+}) is selected from the group consisting of alkaline earth metals, lanthanoids, actinoids, transition metals, post-transition metals and metalloids. The term "X+" represents the oxidation state of the dopant, such as 2+ or 3+ etc., depending on the potential oxidation state of the dopant (D^{X+}).

According to the present invention, alkaline earth metals encompass the elements of group 2 of the periodic table of elements (hereinafter also referred to as "periodic table"), i.e. beryllium (Be), magnesium (Mg), calcium (Ca), strontium (Sr), barium (Ba), and radium (Ra). Lanthanoids encompass the chemical elements with atomic numbers 57 through 71 of the periodic table, i.e. lanthanum (La), cerium (Ce), praseodynium (Pr), neodynium (Nd), promethium (Pm), samarium (Sm), europium (Eu), gadolinium (Gd), terbium (Tb), dysprosium (Dy), holmium (Ho), erbium (Er), thulium (Tm), ytterbium (Yb) and lutetium (Lu). Actinoids encompass the chemical elements with atomic number 89 through 103 of the periodic table, i.e. actinium (Ac), thorium (Th), protactinium (Pa), uranium (U), neptunium (Np), plutonium (Pu), americium (Am), curium (Cm), berkelium (Bk), californium (Cf), einsteinium (Es), fermium (Fm), mendelevium (Md), nobelium (No), and lawrencium (Lr). Transition metals encompass in accordance with the present invention any element in the d-block of the periodic table, which includes groups 3 to 12 of the periodic table (except for La and Ac), i.e. scandium (Sc), titanium (Ti), Vanadium (V), Chromium (Cr), manganese (Mn), iron (Fe), cobalt (Co), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag), cadmium (Cd), hafnium (Hf), tantalum (Ta), tungsten (W), rhenium (Re), osmium (Os), iridium (Ir), platinum (Pt), gold (Au), mercury (Hg), rutherfordium (Rf), dubnium (Db), seaborgium (Sg), bohrium (Bh), meitnerium ((Mt), darmstadtium (Ds), roentgenium (Rg), and copernicium (Cn). Post-transition metals encompass gallium (Ga), tin (Sn), indium (In), thallium (Tl), lead (Pb), and bismuth (Bi). Further, metalloids encompass boron (B), aluminum (Al), carbon (C), silicon (Si), germanium (Ge), arsenic (As), antimony (Sb), tellurium (Te), polonium (Po), and astatine (At).

Preferably, M in the above formula (1) MN:D^{X+} or (2) M₃N₄:D^{X+} is at least one element selected from the group consisting of B, C, Al, Si, Ga, Ge, In, Sn, and Pb. More preferably, M in the formula (1) MN:D^{X+} or (2) M₃N₄:D^{X+} is at least one element selected from the group consisting of B, C, Si, Ga, and Ge. Also, it is preferred that M' in the above formula (3) M'₂Si₅N₈:D^{X+} is at least one element selected from the group consisting of transition metals. When M' in the above formula (3) M'₂Si₅N₈:D^{X+} is a transition metal, it is preferred that the at least one dopant (D^{X+}) is not a transition metal, and thus the at least one dopant (D^{X+}) is preferably selected from the group consisting of alkaline earth metals, lanthanoids, actinoids, post-transition metals and metalloids.

Besides, the inventor has surprisingly found that the multinary nitride or nitridosilicate of the following formula (1') MN, (2') M₃N₄, or (3') M'₂Si₅N₈ can be doped with several ions, even at the same time. Thus, according to a preferred embodiment of the present invention, the doped multinary nitride or nitridosilicate is doped with two or more different dopants (D^{X+}).

Moreover, it is preferred that the dopant (D^{X+}) of the formula (1) MN:D^{X+} is at least one element selected from the group consisting of Mg, Si, Fe, Co, Ni, Zn, Eu, and Tb in its corresponding oxidation state. Independently therefrom, it is preferred that the dopant (D^{X+}) of the following formula (2) M₃N₄:D^{X+} is at least one element selected from the group consisting of Mg, Si, Fe, Co, Ni, Zn, Eu, and Tb in its corresponding oxidation state.

According to the present invention, however, the dopant (D^{X+}) may not only be selected from the aforementioned ionic elements, but also from halogenated compounds of the alkaline earth metals, lanthanoids, actinoids, transition metals, post-transition metals and metalloids. As an example, SiCl₄ may be mentioned without being limited thereto.

Thus, according to a preferred embodiment of the present invention, the dopant (D^{X+}) in the formula (1) MN:D^{X+}, (2) M₃N₄:D^{X+}, or (3) M'₂Si₅N₈:D^{X+} is preferably at least one selected from the group consisting of Mg²⁺, Si⁴⁺, Fe²⁺, Fe³⁺, Co²⁺, Co³⁺, Ni²⁺, Zn²⁺, Eu²⁺, Eu³⁺, Tb³⁺, and SiCl₄.

Preferably, the concentration of the dopant (D^{X+}) is in the range of 1 to 30 mol-% based on the multinary nitride or nitridosilicate.

In another aspect, the present invention provides a bulk material of a doped multinary nitride or nitridosilicate of the following formula (1) MN:D^{X+}, (2) M₃N₄:D^{X+}, or (3) M'₂Si₅N₈:D^{X+} having at least one dopant (D^{X+}) obtainable by the method according to the present invention. As mentioned above, in the formulae (1), (2) and (3), M is at least one element selected from the group consisting of B, C, Al, Si, Ca, Cu, Ga, Ge, In, Sn, and Pb, M' is at least one element selected from the group consisting of alkaline earth metals, transition metals, and lanthanoids, and the at least one dopant (D^{X+}) is selected from the group consisting of alkaline earth metals, lanthanoids, actinoids, transition metals, post-transition metals and metalloids. The term "X+" represents the oxidation state of the dopant, such as 2+ or 3+ etc., depending on the potential oxidation state of the dopant (D^{X+}).

Further, the present invention provides a bulk material of a multinary nitridosilicate of the following formula Co₂Si₅N₈.

According to the present invention, a bulk material of the doped multinary nitride or nitridosilicate of the following formula (1) MN:D^{X+}, (2) M₃N₄:D^{X+}, or (3) M'₂Si₅N₈:D^{X+} having at least one dopant (D^{X+}) can be used as a phosphor material in light-emitting diodes (LEDs). The meaning of M, M' and D^{X+} in the formulae (1), (2) and (3) is the same as mentioned above, except that in the formula (3), M' is at least one element selected from the group consisting of alkaline earth metals, and lanthanoids.

Preferably, the bulk material of the doped multinary nitride or nitridosilicate of the following formula (1) MN:D^{X+}, (2) M₃N₄:D^{X+}, or (3) M'₂Si₅N₈:D^{X+} includes at least two different dopants.

According to a particularly preferred embodiment, the bulk material is a doped multinary nitride of the following formula GaN:D^{X+} or Ge₃N₄:D^{X+}, wherein the dopant is Eu and Tb. According to another particularly preferred embodiment, the bulk material is a doped multinary nitride of the following formula Si₃N₄:D^{X+}, wherein the dopant (D^{X+}) is Eu and/or Tb.

In another aspect, the present invention provides a multicolored LED, which comprises at least two different luminescent materials, wherein the at least two different luminescent materials each comprises a doped multinary nitride or nitridosilicate of the following formula (1) MN:D^{X+}, (2) M₃N₄:D^{X+}, or (3) M'₂Si₅N₈:D^{X+}, wherein the at least two different luminescent materials have the same host in terms of the multinary nitride or nitridosilicate of the formulae (1), (2), or (3), differing only by including two or more different dopants (D^{X+}). As mentioned above, in the formulae (1), (2) and (3), M is at least one element selected from the group consisting of B, C, Al, Si, Ca, Cu, Ga, Ge, In, Sn, and Pb, M' is at least one element selected from the group consisting of alkaline earth metals, and lanthanoids, and the at least one dopant (D^{X+}) is selected from the group consisting of alkaline earth metals, lanthanoids, actinoids, transition metals, post-transition metals and metalloids. The term "X+" represents the oxidation state of the dopant, such as 2+ or 3+ etc., depending on the potential oxidation state of the dopant (D^{X+}).

According to the present invention, a bulk material of the doped multinary nitride or nitridosilicate of the following formula (1) MN:D^{X+}, (2) M₃N₄:D^{X+}, or (3) M'₂Si₅N₈:D^{X+}, or of a bulk material of an undoped multinary nitride or nitridosilicate of the following formula (1') MN, (2') M₃N₄, or (3') M'₂Si₅N₈ can be used as an electrode material in energy storage systems. The meaning of M, M' and D^{X+} in the formulae (1), (1'), (2), (2'), (3) and (3') is the same as mentioned above.

Preferably, the energy storage system is an alkali-metal ion battery, or a hybrid alkali-metal ion battery or a hybrid capacitor. Among those systems, a bulk material of the doped multinary nitride or nitridosilicate of the following formula (1) MN:D^{X+}, (2) M₃N₄:D^{X+}, or (3) M'₂Si₅N₈:D^{X+}, or of a bulk material of an undoped multinary nitride or nitridosilicate of the following formula (1') MN, (2') M₃N₄, or (3') M'₂Si₅N₈ is particularly useful as an electrode material in beyond lithium-ion batteries or a lithium-ion battery (LIB). Beyond lithium-ion batteries encompass sodium/sodium-ion batteries, potassium/potassium-ion batteries, calcium/calcium-ion batteries, magnesium/magnesium-ion batteries, aluminum/aluminum-ion batteries, and zinc/zinc-ion batteries as well as corresponding alkali-metal-air batteries.

The present invention is based on a novel approach for preparing a bulk material of doped multinary nitrides or nitridosilicates of the following formula (1) MN:D^{X+}, (2) M₃N₄:D^{X+}, or (3) M'₂Si₅N₈:D^{X+}, namely by a synthesis method of doping the bulk material of the multinary nitride or nitridosilicate of the following formula (1') MN, (2') M₃N₄, or (3') M'₂Si₅N₈ with at least one dopant (D^{X+}) via a combustion synthesis after providing the bulk material of the multinary nitride or nitridosilicate of the following formula (1') MN, (2') M₃N₄, or (3') M'₂Si₅N₈.

According to the present invention, it was found that a multinary nitride or nitridosilicate of the following formula (1') MN, (2') M₃N₄, or (3') M'₂Si₅N₈ in pure form shows electrochemical activity and reversible electrochemical lithiation and delithiation. This will enlarge the circle of possible materials for lithium and post-lithium ion batteries tremendously.

In addition, according to the present invention, it was surprisingly found that the multinary nitride or nitridosilicate of the following formula (1') MN, (2') M₃N₄, or (3') M'₂Si₅N₈ in pure form can be subsequently doped with at least one dopant (D^{X+}), resulting in a distinct improvement of the battery capacity. This also facilitates a multitude of degrees of freedom to customize and adapt a battery material to special needs.

Besides, as mentioned above, phosphors are usually doped with e.g. Eu²⁺, and only one activator ion is used. Therefore, one host shows one color. The fact that one host can be doped with e.g. several rare-earth activator ions, even at the same time, is an absolutely new approach, enabling host materials having different colors. Based thereon, structural problems inside the LED setup caused by different luminescent hosts can be avoided by using only one material. This will be a large benefit for the development of modern LED phosphors, since more colors can be realized with just one host material. Until now, a new host material was required for each color. Furthermore, the construction of an LED can be simplified massively, since the individual color layers essentially consist of one material, and thus, no more problems arise by different coefficients of thermal expansion and grid bias voltages. In this context, using a bulk material instead of thin films of said doped multinary nitrides or nitridosilicates of the formula (1) MN:D^{X+}, (2) M₃N₄:D^{X+}, or (3) M'₂Si₅N₈:D^{X+} leads to a suppression of the hypsochromic shift of the emission spectrum of the corresponding compound.

According to the present invention, a bulk material refers in contrast to thin films to a material having no restriction in the dimension of the third spatial direction, i.e. the height as the thickness of the material. Thin films are commonly understood as two-dimensional materials having in one spatial direction, i.e. the thickness direction, a height in the nanometer range up to several micrometers. According to the present invention, the thickness of the bulk material is preferably more than 2.4 µm, more preferably 3.0 µm or more, even more preferably 4.0 µm or more, and most preferably 5.0 µm or more. Thin films have their own physical and chemical properties, which a bulk material from which the thin films are usually deposited does not have. According to the present invention, the bulk material already has the desired properties. Furthermore, it should be noted that the bulk material of the present invention is not obtained by a thin film process.

The present invention including preferred embodiments will now be described in more detail along with the accompanying figures. The figures show:
- Fig. 1:: CIE diagram and colors of GaN and Ge₃N₄ each doped with a) Tb³⁺, b) Eu³⁺ and Tb³⁺, c) Eu³⁺ and of Si₃N₄ doped with a) Tb³⁺, c) Eu³⁺.
- Fig. 2:: Emission spectra and colors of Si₃N₄ doped with a) Eu³⁺ (red), and b) Tb³⁺ (green).
- Fig. 3:: Excitation (solid line) and emission spectra (dashed line) of GaN doped with a) Eu³⁺ (red), b) Tb³⁺ (green), and c) Eu³⁺ and Tb³⁺ (orange).
- Fig. 4:: Excitation (solid line) and emission spectra (dashed line) of Ge₃N₄ doped with a) Eu³⁺ (red), b) Tb³⁺ (green), and c) Eu³⁺ and Tb³⁺ (orange).
- Fig. 5:: Galvanostatic cycling of a) BN, c) BN doped with Si, e) BN doped with Ni vs. Li⁺|Li (cycle 1 solid line, cycle 20 dashed line, cycle 200 dotted line), and cycle stability and efficiency of b) BN, d) BN doped with Si, f) BN doped with Ni vs. Li⁺|Li (efficiency squares, capacity triangles).
- Fig. 6:: Galvanostatic cycling of a) GaN, c) GaN doped with Zn, e) GaN doped with Zn and Mg vs. Li⁺|Li (cycle 1 solid line, cycle 20 dashed line, cycle 200 dotted line), and cycle stability and efficiency of b) GaN, d) GaN doped with Zn, f) GaN doped with Zn and Mg vs. Li⁺|Li (efficiency squares, capacity triangles).
- Fig. 7:: Galvanostatic cycling of a) C₃N₄ doped with Ni, c) C₃N₄ doped with Ni and Si vs. Li⁺|Li (cycle 1 solid line, cycle 20 dashed line, cycle 200 dotted line), and cycle stability and efficiency of b) C₃N₄, d) C₃N₄ doped with Ni and Si vs. Li⁺|Li (efficiency squares, capacity triangles).
- Fig. 8:: Galvanostatic cycling of a) Si₃N₄, c) Si₃N₄ doped with SiCl₄ vs. Li⁺|Li (cycle 1 solid line, cycle 20 dashed line, cycle 200 dotted line), and cycle stability and efficiency of b) Si₃N₄, d) Si₃N₄ doped with SiCl₄ vs.Li⁺|Li (efficiency squares, capacity triangles).
- Fig. 9:: Galvanostatic cycling of a) Ge₃N₄, c) Ge₃N₄ doped with Zn vs. Li⁺|Li (cycle 1 solid line, cycle 20 dashed line, cycle 200 dotted line), and cycle stability and efficiency of b) Ge₃N₄, d) Ge₃N₄ doped with Zn vs. Li⁺|Li (efficiency squares, capacity triangles).
- Fig. 10:: Galvanostatic cycling of a) Co₂Si₅N₈ vs. Li⁺|Li (cycle 1 solid line, cycle 10 dashed line, cycle 19 dotted line), and cycle stability and efficiency of b) Co₂Si₅N₈ vs. Li⁺|Li (efficiency squares, capacity triangles).

According to the present invention, the multinary nitride or nitridosilicate of the following formula (1') MN, (2') M₃N₄, or (3') M'₂Si₅N₈ as well as the doped multinary nitride or nitridosilicate of the following formula (1) MN:D^{X+}, (2) M₃N₄:D^{X+}, or (3) M'₂Si₅N₈:D^{X+} are bulk materials. Generally, a bulk material differs from thin films, which are commonly understood as two-dimensional materials having in one spatial direction, i.e. the thickness direction, a height in the nanometer range up to several micrometers, in that there is no restriction in the dimension of the third spatial direction. As mentioned above, according to the present invention, the thickness of the bulk material is preferably more than 2.4 µm, more preferably 3.0 µm or more, even more preferably 4.0 µm or more, and most preferably 5.0 µm or more. The upper limit of the thickness of the bulk material is not particularly limited and may range from several millimeters to centimeters. Also, as will be described in detail herein-below, the bulk material of the present invention is not obtained by a thin film process.

As mentioned above, the present invention relates to a method for producing a bulk material of a doped multinary nitride or nitridosilicate of the following formula (1) MN:D^{X+}, (2) M₃N₄:D^{X+}, or (3) M'₂Si₅N₈:D^{X+}. According to the present invention, the method comprises a step of providing a bulk material of a multinary nitride or nitridosilicate of the following formula (1') MN, (2') M₃N₄, or (3') M'₂Si₅N₈, and a step of doping the bulk materials of the multinary nitride or nitridosilicate with at least one dopant (D^{X+}) at an elevated temperature of at least 400°C. According to the present invention, M in the above formula (1) MN:D^{X+} or (2) M₃N₄:D^{X+} is at least one element selected from the group consisting of B, C, Al, Si, Ca, Cu, Ga, Ge, In, Sn, and Pb, whereas M' in the above formula (3) M'₂Si₅N₈:D^{X+} is at least one element selected from the group consisting of alkaline earth metals, transition metals, and lanthanoids, and the at least one dopant (D^{X+}) is selected from the group consisting of alkaline earth metals, lanthanoids, actinoids, transition metals, post-transition metals and metalloids. The term "X+" represents the oxidation state of the dopant, such as 2+ or 3+ etc., depending on the potential oxidation state of the dopant (D^{X+}).

According to the present invention, it has been found that a bulk material of a multinary nitride or nitridosilicate of the formulae (1'), (2') and (3') can be subsequently doped with a dopant (D^{X+}). As mentioned above, in literature there can be found several multinary nitrides or nitridosilicates doped with rare-earth (RE) activator ions, i.e. RE²⁺ as well as RE³⁺ (cf. for instance J. Heikenfeld et al., Appl. Phys. Lett. 1999, 75, 1189-1191). However, a relevant point here is that the doping ion is inserted during the main synthesis and not afterwards. Furthermore, the application described in the prior art needs the use of thin films and of the respective methods of producing such.

According to the present invention, it has surprisingly been found that a multinary nitride or nitridosilicate of the formulae (1'), (2') and (3') can be selectively doped by a subsequent combustion synthesis as will be described in more detail below. The method for producing the doped multinary nitride or nitridosilicate of the formulae (1), (2) and (3) according to the present invention comprises the step of doping the multinary nitride or nitridosilicate of the following formula (1') MN, (2') M₃N₄, or (3') M'₂Si₅N₈ (i.e. the undoped nitrides and nitridosilicates of the formulae (1'), (2') and (3')) with at least one dopant (D^{X+}) at an elevated temperature of at least 400°C. That is, contrary to the above-mentioned state of the art, doping with activator ions is not carried out during the main synthesis of the multinary nitride or nitridosilicate.

As mentioned above, according to the present invention, the dopant (D^{X+}) is selected from the group consisting of alkaline earth metals, lanthanoids, actinoids, transition metals, post-transition metals and metalloids. The doping of the undoped nitrides and nitridosilicates of the formulae (1'), (2') and (3') can be carried out by a successive combustion synthesis in which the respective halogenated dopant(s) (D^{X+}) will be mixed with the bulk material of the multinary nitrides and nitridosilicates of the formulae (1'), (2') and (3') and heated to at least 400°C. For instance, it is preferred to use the corresponding metal chlorides of the dopant(s) (D^{X+}) which are commonly in powder form. As long as SiCl₄ doped multinary nitrides and nitridosilicates of the formulae (1'), (2') and (3') is concerned, liquid SiCl₄ can be similarly mixed with the multinary nitrides and nitridosilicates of the formulae (1'), (2') and (3').

For the combustion synthesis, it is preferred to carry out the doping in the presence of a low explosive material, such as a nitrogen-based fuel. For instance, the mixture of the multinary nitrides and nitridosilicates of the formulae (1'), (2') and (3') and the halogenated dopant(s) (D^{X+}) may be combined with an aqueous urea ammonium nitrate solution, which is to be heated to at least 400°C. Preferably, the reaction temperature is set to at least 450°C, more preferably to at least 500°C.

The molar ratio of the multinary nitrides and nitridosilicates of the formulae (1'), (2') and (3') and the dopant(s) (D^{X+}) is not specifically limited. Preferably, however, the concentration of the dopant(s) (D^{X+}) is in the range of 1 to 30 mol-% based on the multinary nitrides and nitridosilicates of the formulae (1'), (2') and (3'), more preferably 5 to 20 mol-%. Accordingly, the dopant(s) (D^{X+}) are preferably mixed with the multinary nitrides and nitridosilicates of the formulae (1'), (2') and (3') in an amount so that the content of the dopant(s) (D^{X+}) in the doped multinary nitrides and nitridosilicates of the formulae (1), (2) and (3) is in the aforementioned range, for instance in an about equimolar amount.

According to the present invention, due to the subsequent doping with at least one dopant (D^{X+}) of the bulk material of the multinary nitrides and nitridosilicates of the formulae (1'), (2') and (3'), it is possible to provide a bulk material of the doped multinary nitrides and nitridosilicates of the formulae (1), (2) and (3), in which the at least one dopant (D^{X+}) is uniformly distributed within the bulk material.

Thus, doping of the multinary nitrides and nitridosilicates of the formulae (1'), (2') and (3') with such at least one dopant (D^{X+}) opens up a multitude of degrees of freedom to customize and adapt e.g. a battery material to special needs for their applicability in lithium-ion batteries as well as in post-lithium-ion energy storage systems, such as beyond lithium-ion batteries (Na, K, Ca, Mg, Al, Zn), hybrid alkali-metal-ion batteries, or hybrid capacitors. As shown in the experimental section, this doping improves the capacity enormously. One big advantage is the tuning of the material properties by doping of a bulk material of multinary nitrides and nitridosilicates with several transition metals, such as Ni, Co, Cu, Fe, Mn, or Zn, and some other doping metals such as Mg, Si, and SiCl₄, to improve their applicability in the aforementioned batteries.

Besides, the bulk material of the doped multinary nitrides and nitridosilicates according to the present invention can be used as a phosphor material in light-emitting diodes (LEDs). Concerning the luminescence of doped multinary nitrides and nitridosilicates of the formulae (1), (2) and (3), a large benefit of the present invention is the fact that one host can be doped with two or more different dopants (D^{X+}) even at the same time. Doping one host with e.g. several rare-earth activator ions, even at the same time, is an absolutely new approach, enabling host materials having different colors. Normally, doping is performed with Eu²⁺ and only one activator ion is used, and thus one host shows only one color.

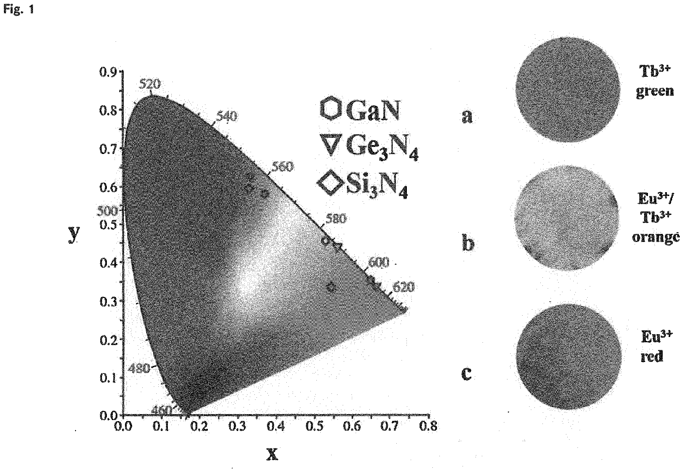

The fact that one host can be doped with different dopants (D^{X+}), even at the same time, is absolutely new, resulting in the fact that one host can deliver different colors, as it is also shown in Fig. 1. By this fact, structural problems inside the LED setup caused by different luminescent hosts can be avoided by using only one material. This will be a large benefit for the development of modern LED phosphors. In contrast, using different host materials commonly leads to structural misfits. In particular, since the host materials can have different coefficients of thermal expansion and due to different grid bias voltages of the host materials, multicolor LEDs often suffer from such structural problems. According to the present invention, these problems can be solved, since the host materials can be doped with different dopants, even at the same time, allowing to provide one host material for all colors.

Thus, the bulk material of the doped multinary nitride or nitridosilicate of the formula (1) MN:D^{X+}, (2) M₃N₄:D^{X+}, or (3) M'₂Si₅N₈:D^{X+} preferably includes at least two different dopants. Preferably, the doped multinary nitrides and nitridosilicates according to the present invention include Eu and Tb.

According to a particularly preferred embodiment, the bulk material is a doped multinary nitride of the following formula GaN:D^{X+} or Ge₃N₄:D^{X+}, wherein the dopant (D^{X+}) is Eu and Tb. According to another particularly preferred embodiment, the bulk material is a doped multinary nitride of the following formula Si₃N₄:D^{X+}, wherein the dopant (D^{X+}) is Eu and/or Tb.

In another aspect, the present invention provides a multicolored LED, which comprises at least two different luminescent materials, the at least two different luminescent materials each comprising a doped multinary nitride or nitridosilicate of the formulae (1), (2), or (3). The luminescent materials differ from one another only in the dopant metal. That is, a specific nitride or nitridosilicate of the formulae (1), (2), or (3) is used as host and this host is doped with two or more different dopants (D^{X+}).

Specific non-limiting examples of the doped multinary nitrides and nitridosilicates of the formulae (1), (2), or (3) include the following examples: GaN:D^{X+}, Ge₃N₄:D^{X+}, and Si₃N₄:D^{X+}, wherein the dopant (D^{X+}) is Eu and/or Tb.

Besides, in contrast to bulk materials, thin films exhibit an increased lowest energy E₀, and thus an increased state density at this energy E₀ resulting in a hypsochromic shift of the emission spectrum. Hence, bulk materials of the doped multinary nitrides and nitridosilicates of the formulae (1), (2) and (3) decrease the hypsochromic shift of the emission spectrum. According to the present invention, a bulk material of the doped multinary nitride or nitridosilicate of the following formula (1) MN:D^{X+}, (2) M₃N₄:D^{X+}, or (3) M'₂Si₅N₈:D^{X+}, or of a bulk material of an undoped multinary nitride or nitridosilicate of the following formula (1') MN, (2') M₃N₄, or (3') M'₂Si₅N₈ can be used as an electrode material in energy storage systems. The meaning of M, M' and D^{X+} in the formulae (1), (1'), (2), (2'), (3) and (3') is the same as mentioned above. According to the present invention, it was found that a multinary nitride or nitridosilicate of the following formula (1') MN, (2') M₃N₄, or (3') M'₂Si₅N₈ in pure form shows electrochemical activity and reversible electrochemical lithiation and delithiation. This will enlarge the circle of possible materials for lithium and post-lithium ion batteries tremendously.

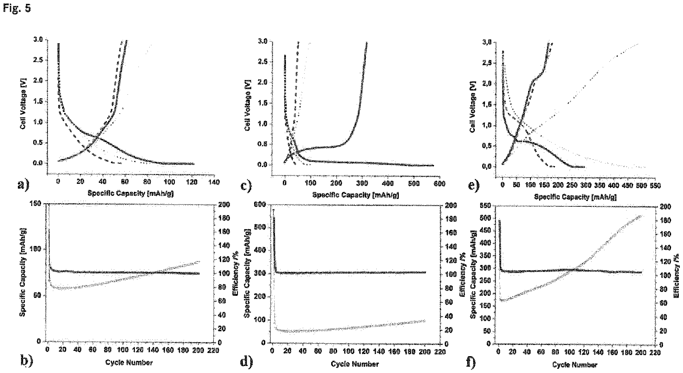

For instance, as will be described in the experimental section, the voltage profiles observed during galvanostatic cycling of a bulk material of an undoped BN with respect to Li|Li⁺ in the voltage range between 3.0 V and 0.01 V are shown in Figs. 5a and 5b. As can be seen in Fig. 5b, with each cycle the cycle efficiency remains the same, while the capacity is slightly increased.

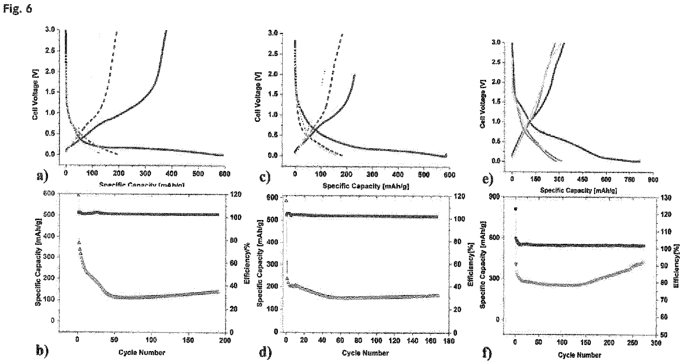

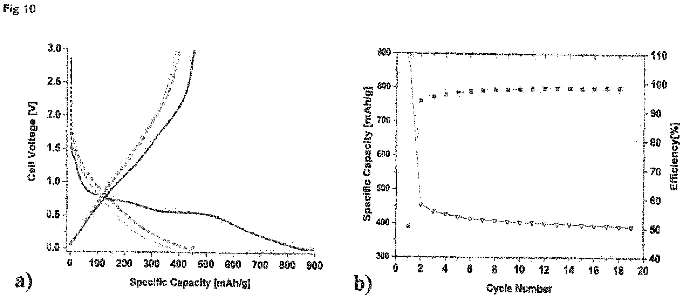

Moreover, the voltage profiles observed during galvanostatic cycling of bulk materials of undoped GaN, C₃N₄, Ge₃N₄,Si₃N₄ and Co₂Si₅N₈ with respect to Li|Li⁺ in the voltage range between 3.0 V and 0.01 V are shown in Figs. 6 to 10. Even though not shown, additional experiments have been conducted with AIN, PbN, Sn₃N₄, In₃N₄ and Pb₃N₄.

The above results demonstrate that a bulk material of an undoped multinary nitride or nitridosilicate of the formulae (1'), (2') and (3'), as evidenced by BN, GaN, AIN, PbN, C₃N₄, Ge₃N₄, Si₃N₄, Sn₃N₄, In₃N₄, Pb₃N₄ and Co₂Si₅N₈, can be used as a negative electrode (anode) material in energy storage systems, since said bulk materials of nitrides or nitridosilicates show electrochemical activity and reversible electrochemical lithiation and delithiation. In particular, the above investigations show that undoped BN, GaN, AIN, PbN, C₃N₄, Ge₃N₄,Si₃N₄ and Co₂Si₅N₈ have very good cycling properties over a large cycle number. Thus, undoped multinary nitrides and nitridosilicates of the formulae (1'), (2') and (3'), preferably nitrides and nitridosilicates selected from the group consisting of BN, GaN, AIN, PbN, C₃N₄, Ge₃N₄,Si₃N₄, Sn₃N₄, In₃N₄, Pb₃N₄ and Co₂Si₅N₈, can be suitably used in highly efficient energy storage systems, particularly, in an alkali-metal-ion battery such as beyond lithium-ion batteries (Na, K, Ca, Mg, Al, Zn) or a lithium-ion battery. In addition, said undoped multinary nitrides and nitridosilicates such as BN, GaN, AIN, PbN, C₃N₄, Ge₃N₄,Si₃N₄, Sn₃N₄, In₃N₄, Pb₃N₄ and Co₂Si₅N₈ can be suitably used in a hybrid alkali-metal-ion battery, or a hybrid capacitor.

In addition, it has been found that doping the multinary nitrides and nitridosilicates of the formulae (1'), (2'), and (3') with at least one dopant (D^{X+}) results in a distinct improvement of the battery capacity. This also facilitates a multitude of degrees of freedom to customize and adapt a battery material to special needs as will be demonstrated in the experimental section below.

Preferably, the bulk material is a doped multinary nitride or nitridosilicate of the formulae (1), (2), or (3), wherein the at least one dopant (D^{X+}) is selected from the group consisting of Mg, Si, Fe, Co, Ni, and Zn in its corresponding oxidation state. More preferably, the bulk material is a doped multinary nitride of the following formula BN:D^{X+}, wherein the dopant is Si or Ni, or wherein the bulk material is a doped multinary nitride of the following formula GaN:D^{X+}, wherein the dopant is Zn or Zn and Mg.

Further, the present invention provides a bulk material of an undoped multinary nitridosilicate of the following formula Co₂Si₅N₈. According to the present invention, a nitridosilicate of formula (3') M'₂Si₅N₈ can be obtained by reacting a nitridosilicate compound of the following formula X₂Si₅N₈ (X = Ca, Sr, Ba) with M'Cl₂ (M' = transition metals) under an argon atmosphere at an elevated temperature of at least 900°C. Preferably, the reaction temperature is set to at least 950°C, more preferably to at least 1000°C. Of course, this reaction is neither limited to that specific temperature, nor to the specific compounds, but is applicable to other materials and temperatures.

The present invention will be further illustrated in the following examples without being limited thereto.

### Examples

### Synthesis of Co₂Si₅N₈

The starting material Ca₂Si₅N₈ was synthesized according to S.R. Römer et al., Chem. Eur. J. 2008, 14, 7892-7902. Ca₂Si₅N₈ and CoCl₂ (molar ratio Ca:Co = 1:1) were thoroughly mixed in an agate mortar and filled into a dry silica ampoule. The subsequent ion exchange was carried out in a fused silica ampoule under argon atmosphere at 900 to 1000°C for 3 to 9 hours.

### Doping of a bulk material of a multinary nitride or nitridosilicate of the following formula (1') MN, (2') M₃N₄, or (3') M'₂Si₅N₈

The doping of the bulk materials of the multinary nitrides or nitridosilicates of the following formula (1') MN, (2') M₃N₄, or (3') M'₂Si₅N₈ was realized by a successive combustion synthesis. Therefore, the respective metal chlorides (such as MCl₂, MCl₃, M'Cl₂ or M'Cl₃, equimolar amount with respect to (1') MN, (2') M₃N₄, or (3') M'₂Si₅N₈), NH₄NO₃ (40 mg), urea (900 mg) and 5 mL H₂O were added to (1') MN, (2') M₃N₄, or (3') M'₂Si₅N₈ (1 mol). This mixture was put into an oven at 400 to 600°C for 10 minutes.

### Luminescence measurements

The luminescence spectra and quantum yield measurements were performed on a Fluorolog^{®}-3 Horiba Jobin Yvon equipped with a TBX detector picosecond photon detection device and a 450 W xenon lamp.

The absolute quantum yields were measured at room temperature in a Horiba Quanta-ϕ F-3029 integrating sphere coupled to the system by a fiber-optic bundle. Data were processed by the FluorEssence^{™} software (v.3.5.1.20) supplied by Horiba-Jobin-Yvon. The powder samples were prepared by filling the powder into a Spectralon^{®} sample holder covered with a quartz coverslip. As blank a solid body Spectralon^{®} sample was used. The measurements were performed as 4-curve method, measuring the Rayleigh lines and luminescence bands in separate datasets for the sample and the blank. The spectra were measured with a step increment of 1 nm and an integration time of 0.1 seconds for the Rayleigh lines and 1.0 seconds for the emission bands. The excitation and emission slit-widths were set to 1 nm and 2 nm, respectively. Keeping the detector signal in linear range, neutral density filters were applied when necessary. For each sample, excitation and emission spectra were collected to find the corresponding ideal wavelengths.

Bulk materials of multinary nitrides or nitridosilicates of the following formula (1') M N, (2') M₃N₄, or (3') M'₂Si₅N₈ are considered to be efficient host candidates for rare-earth activator ions such as Eu³⁺ and Tb³⁺. Eu³⁺ is considered as an important activator ion with red emission corresponding to the transition of ⁵D₀ → ⁷F_{J} (J = 1-6). The emission of Tb³⁺ is due to the transition between the emitting states of ⁵D_{J} and the excited states of ⁷F_{J}, and the main intense green emission is attributed to the transition of ⁵D₄ → ⁷F₅ which is located at ca. 544 nm.

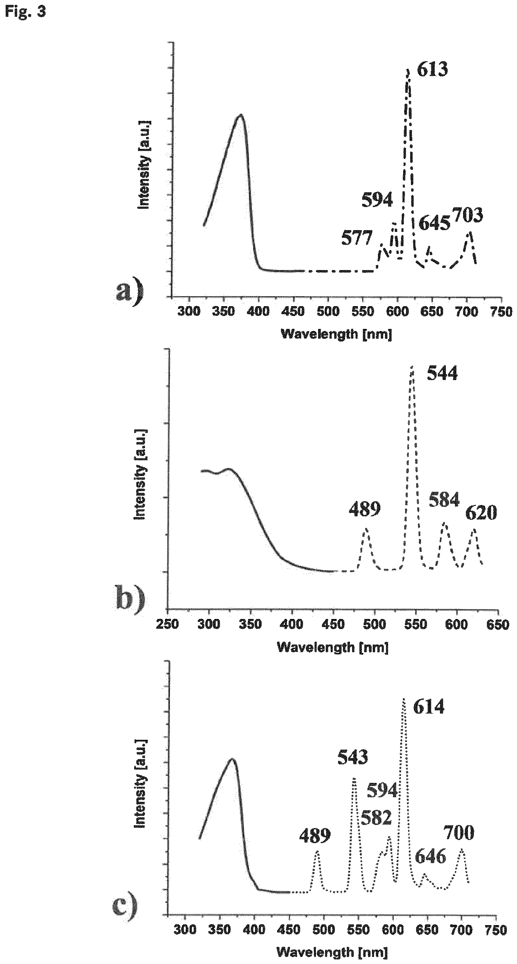

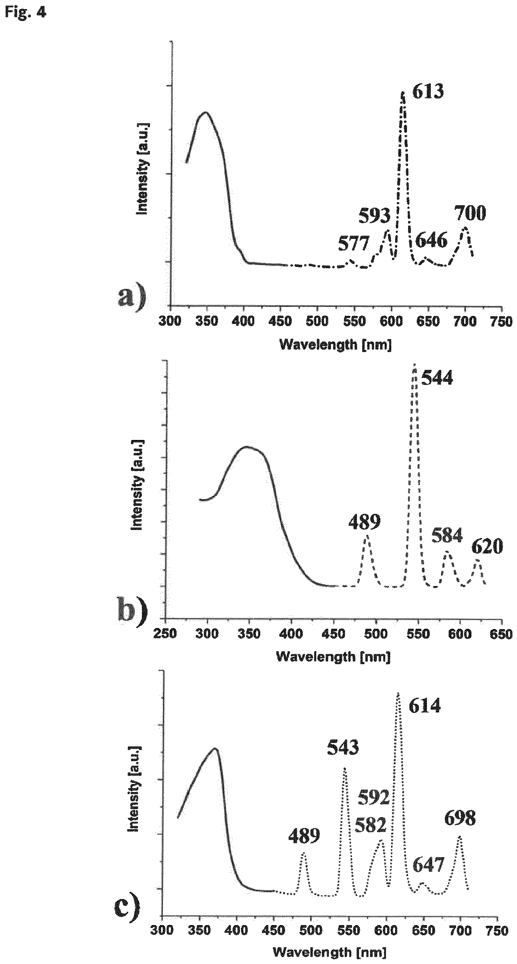

Fig. 1 shows the CIE diagram and colors of GaN, Ge₃N₄ and Si₃N₄ doped with Eu³⁺ and/or Tb³⁺ proving that a color tuning of one host with different activator ions is possible (cf. Fig. 1a, 1c, Fig. 2, Fig. 3a, 3b, and Fig. 4a, 4b). In addition, it has been proven that GaN and Ge₃N₄ were doped with different dopant metals (Eu³⁺ and Tb³⁺) at the same time resulting in a further color tuning of only one host material (cf. Fig. 1b, Fig. 3c and Fig. 4c).

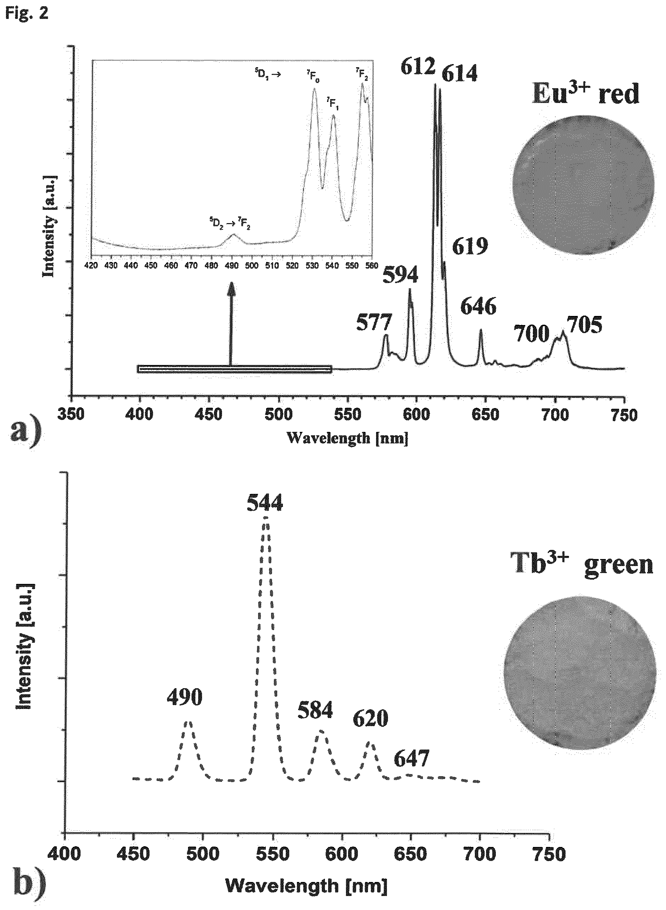

Fig. 2a shows that in the emission spectrum of Si₃N₄ doped with Eu³⁺, the transitions ⁵D₀ → ⁷F₀ and ⁷F₃ are more intense than usually. The ⁵D₀ → ⁷F₃ transition is even greater than the ⁵D₀ → ⁷F₄ transition, which is not common. This means a strong J-mixing and a strong crystal-field perturbation in this matrix. The ⁵D₀ → ⁷F₀ transition is also broad, by inhomogeneous enlargement, indicating the location of Eu³⁺ ions in several sites.

Fig. 2b illustrates the emission spectra of Si₃N₄ doped with Tb³⁺. The strongest emission peak is at 544 nm corresponding to the ⁵D₄ → ⁷F₅ transition, while the peaks at 490 nm, 584 nm and 620 nm, respectively, originate from the ⁵D₄ → ⁷F₆, ⁵D₄ → ⁷F₄ and ⁵D₄ → ⁷F₃ transitions of the Tb³⁺ ions.

Furthermore, it was demonstrated for GaN and Ge₃N₄, for instance, that two different activator ions in one host can be uniformly inserted showing the typical bands of Eu³⁺ as well as Tb³⁺ resulting in an orange body color (cf. Fig. 1b, Fig. 3c and Fig. 4c).

### Battery measurements (galvanostatic cycling)

Electrode films were prepared by mixing the active material (i.e. bulk material of doped/ undoped multinary nitrides or nitridosilicates of the formulae (1), (2), (3), (1'), (2') and (3')) with SuperP carbon and polyvinylidene fluoride binder in a weight ratio of 70:20:10. A slurry was prepared by addition of *N*-methylpyrrolidone and then films were cast on Cu foil with a wet thickness of 120 µm and dried at 80°C for 8h. Afterwards discs with a diameter of 14 mm were cut from these films and assembled into coin cells (2025 type) with Cellgard 2325 separator, 1 M LiPF₆ in ethylene carbonate/dimethyl carbonate (1:1) as electrolyte, and Li metal counter electrode in an argon-filled glove box. Galvanostatic cycling was performed in the voltage range between 3.0 V and 0.01 V with a current density of 35 mA/g. Cyclic voltammetry was done with a sweep rate of 0.1 mV/s in the voltage range between 3.0 V and 0.01 V.

The voltage profiles observed during galvanostatic cycling of a bulk material of an undoped BN with respect to Li|Li⁺ in the voltage range between 3.0 V and 0.01 V are shown in Fig. 5a and 5b. During the first discharge, two regimes are visible in this voltage profile. At the beginning, a first sloping plateau occurs between 1.25 V to 0.5 V, corresponding to a specific capacity of 40 mAh/g and conversion of 0.037Li per formula unit BN. Subsequently, from 0.5 V to 0.01 V a second plateau is observed. This second plateau is not so prominent but still delivers the remaining capacity of 80 mAh/g which corresponds to 0.084Li per formula unit BN. In the first charge, it is observed that only 60 mAh/g of the specific capacity is reversible corresponding to 50% of the first discharge capacity (0.066Li per formula unit of BN).

As can be seen in Fig. 5b, with each cycle, the cycle efficiency remains the same, while the capacity is slightly increased. In the 200^{th} cycle the capacity is 90 mAh/g. This phenomenon is explained by the conversion of the material.

The voltage profiles observed during galvanostatic cycling of a bulk material of an undoped GaN with respect to Li|Li⁺ in the voltage range between 3.0 V and 0.01 V are shown in Fig. 6a and 6b. During the first discharge, a long plateau is obtained from 0.5 V to 0.01 V of 600 mAh/g, which corresponds to 2.0Li per formula unit GaN. In the 20^{th} cycle, the specific capacity is 150 mAh/g and falls systematically up to the 50^{th} cycle. From the 60^{th} cycle, the capacity slowly increases and in the 200^{th} cycle the specific capacity is 200 mAh/g.

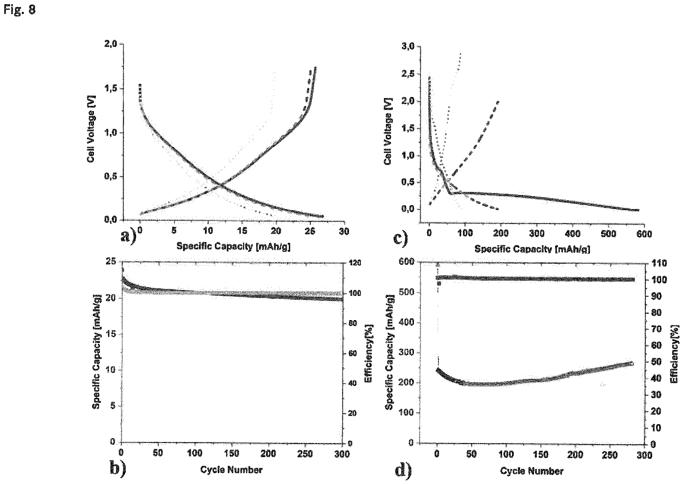

Moreover, the voltage profiles observed during galvanostatic cycling of bulk materials of undoped Ge₃N₄, Si₃N₄ and Co₂Si₅N₈ with respect to Li|Li⁺ in the voltage range between 3.0 V and 0.01 V are shown in Figs. 8a, 8b, 9a, 9b, 10a and 10b.

### BN doped with Si:

As shown in Fig. 5c, the first discharge curve shows a specific capacity of 600 mAh/g (0.55Li per formula unit). In the 20^{th} cycle, the capacity is comparable to the capacity of the undoped material. Also here, in the first 200 cycles a slight increase in capacity can be observed.

### BN doped with Ni:

For the Ni doped BN, the galvanostatic cycling is shown in Fig. 5e and 5f, which demonstrate the specific capacity is significantly and constantly increased by doping with Ni. The first discharge curve shows a specific capacity of 300 mAh/g (0.27Li per formula unit), in the 20^{th} cycle 200 mAh/g (0.18Li per formula unit) and in the 200^{th} cycle the capacity corresponds to 525 mAh/g (0.47Li per formula unit).

### GaN doped with Zn:

As can be seen in Fig. 6, the electrochemistry of Zn-doped material remains the same like for undoped material.

### GaN doped with Zn-Mg:

For the Zn-Mg doped GaN, the galvanostatic cycling is shown in Fig. 6e and 6f, which demonstrate the specific capacity is significantly increased by doping with Zn and Mg. The specific capacitance increases to 850 mAh/g compared to undoped GaN. Until the 150^{th} cycle, a plateau in the specific capacity vs. cycle number curve can be seen and after that the capacity increases continually. The Zn-Mg doping has a favorable influence on the GaN. In 200^{th} cycle, the specific capacity is 450 mAh/g.

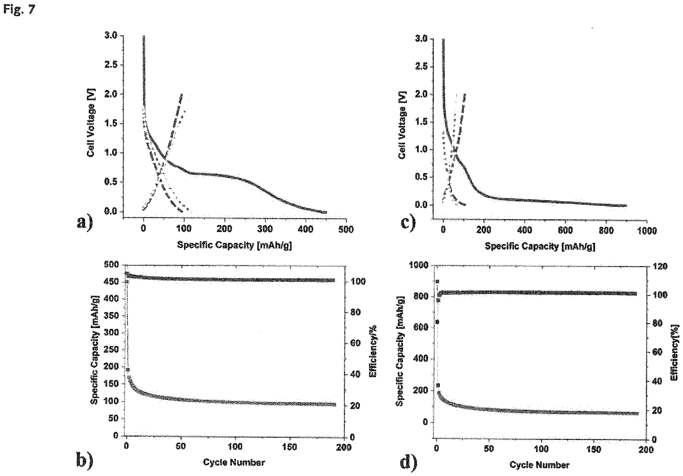

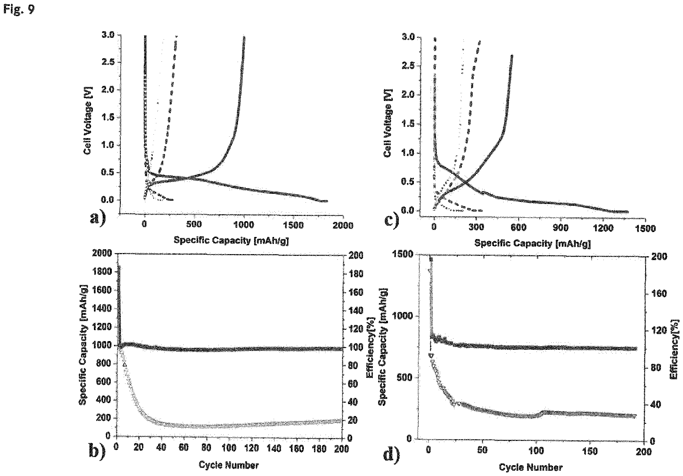

Similar results were obtained when Si₃N₄, Ge₃N₄ and C₃N₄ were doped with at least one of Ni, Zn, Si, and SiCl₄ demonstrating that the doping can influence and improve the cycling behavior. A respective galvanostatic cycling of Ni doped C₃N₄ vs Li⁺|Li is shown in Figs. 7a and 7b, a galvanostatic cycling of Ni and Si doped C₃N₄ vs Li⁺|Li is shown in Figs. 7c and 7d, a galvanostatic cycling of SiCl₄ doped Si₃N₄ vs Li⁺|Li is shown in Figs. 8c and 8d, whereas a galvanostatic cycling of Zn doped Ge₃N₄ vs Li⁺|Li is shown in Figs. 9c and 9d.

## Claims

1. A method for producing a bulk material of a doped multinary nitride or nitridosilicate of the following formula (1) MN:D^{X+}, (2) M₃N₄:D^{X+}, or (3) M'₂Si₅N₈:D^{X+}, the method comprising the following steps:
providing a bulk material of a multinary nitride or nitridosilicate of the following formula (1') MN, (2') M₃N₄, or (3') M'₂Si₅N₈, and
doping the bulk material of the multinary nitride or nitridosilicate with at least one dopant (D^{X+}) at an elevated temperature of at least 400°C,
wherein M is at least one element selected from the group consisting of B, C, Al, Si, Ca, Cu, Ga, Ge, In, Sn, and Pb,
wherein M' is at least one element selected from the group consisting of alkaline earth metals, transition metals, and lanthanoids,
wherein the at least one dopant (D^{X+}) is selected from the group consisting of alkaline earth metals, lanthanoids, actinoids, transition metals, post-transition metals and metalloids, and
wherein X+ represents the oxidation state of the dopant (D^{X+}).

2. The method according to claim 1, wherein M is at least one element selected from the group consisting of B, C, Al, Si, Ga, Ge, In, Sn, and Pb.

3. The method according to claim 1, wherein M' is at least one element selected from the group consisting of transition metals, and the at least one dopant (D^{X+}) is selected from the group consisting of alkaline earth metals, lanthanoids, actinoids, post-transition metals and metalloids.

4. The method according to any one of claims 1 to 3, wherein the doped multinary nitride or nitridosilicate is doped with two or more different dopants (D^{X+}).

5. The method according to any one of claims 1 to 4, wherein the dopant (D^{X+}) of the following formula (1) MN:D^{X+} is at least one element selected from the group consisting of Mg, Si, Fe, Co, Ni, Zn, Eu, and Tb in its corresponding oxidation state, or
wherein the dopant (D^{X+}) of the following formula (2) M₃N₄:D^{X+} is at least one element selected from the group consisting of Mg, Si, Fe, Co, Ni, Zn, Eu, and Tb in its corresponding oxidation state.

6. The method according to any one of claims 1 to 5, wherein the concentration of the dopant (D^{X+}) is in the range of 1 to 30 mol-% based on the multinary nitride or nitridosilicate.

7. A bulk material of a doped multinary nitride or nitridosilicate of the following formula (1) MN:D^{X+}, (2) M₃N₄:D^{X+}, or (3) M'₂Si₅N₈:D^{X+} having at least one dopant (D^{X+}) obtainable by the method according to any one of claims 1 to 6,
wherein M is at least one element selected from the group consisting of B, C, Al, Si, Ca, Cu, Ga, Ge, In, Sn, and Pb,
wherein M' is at least one element selected from the group consisting of alkaline earth metals, transition metals, and lanthanoids,
wherein the at least one dopant (D^{X+}) is selected from the group consisting of alkaline earth metals, lanthanoids, actinoids, transition metals, post-transition metals and metalloids, and
wherein X+ represents the oxidation state of the dopant (D^{X+}).

8. A bulk material of a multinary nitridosilicate of the following formula Co₂Si₅N₈.

9. Use of a bulk material of a doped multinary nitride or nitridosilicate of the following formula (1) MN:D^{X+}, (2) M₃N₄:D^{X+}, or (3) M'₂Si₅N₈:D^{X+} having at least one dopant (D^{X+}) as a phosphor material in light-emitting diodes (LEDs),
wherein M is at least one element selected from the group consisting of B, C, Al, Si, Ca, Cu, Ga, Ge, In, Sn, and Pb,
wherein M' is at least one element selected from the group consisting of alkaline earth metals, and lanthanoids,
wherein the at least one dopant (D^{X+}) is selected from the group consisting of alkaline earth metals, lanthanoids, actinoids, transition metals, post-transition metals and metalloids, and
wherein X+ represents the oxidation state of the dopant (D^{X+}).

10. Use according to claim 9, wherein the bulk material of the doped multinary nitride or nitridosilicate of the following formula (1) MN:D^{X+}, (2) M₃N₄:D^{X+}, or (3) M'₂Si₅N₈:D^{X+} includes at least two different dopants.

11. Use according to claim 9 or 10, wherein the bulk material is a doped multinary nitride of the following formula GaN:D^{X+} or Ge₃N₄:D^{X+}, wherein the dopant (D^{X+}) is Eu and Tb, or wherein the bulk material is a doped multinary nitride of the following formula Si₃N₄:D^{X+}, wherein the dopant (D^{X+}) is Eu and/or Tb.

12. A multicolored light-emitting diode (LED), comprising at least two different luminescent materials, wherein the at least two different luminescent materials each comprises a doped multinary nitride or nitridosilicate of the following formula (1) MN:D^{X+}, (2) M₃N₄:D^{X+}, or (3) M'₂Si₅N₈:D^{X+}, wherein the at least two different luminescent materials have the same host in terms of the multinary nitride or nitridosilicate of the formulae (1), (2), or (3), differing only by including two or more different dopants (D^{X+}),
wherein M is at least one element selected from the group consisting of B, C, Al, Si, Ca, Cu, Ga, Ge, In, Sn, and Pb,
wherein M' is at least one element selected from the group consisting of alkaline earth metals, and lanthanoids,
wherein the two or more different dopants (D^{X+}) are selected from the group consisting of alkaline earth metals, lanthanoids, actinoids, transition metals, post-transition metals and metalloids, and
wherein X+ represents the oxidation state of the dopant (D^{X+}).

13. Use of a bulk material of a doped multinary nitride or nitridosilicate of the following formula (1) MN:D^{X+}, (2) M₃N₄:D^{X+}, or (3) M'₂Si₅N₈:D^{X+}, or of a bulk material of an undoped multinary nitride or nitridosilicate of the following formula (1') MN, (2') M₃N₄, or (3') M'₂Si₅N₈ as an electrode material in energy storage systems,
wherein M is at least one element selected from the group consisting of B, C, Al, Si, Ca, Cu, Ga, Ge, In, Sn, and Pb;
wherein M' is at least one element selected from the group consisting of alkaline earth metals, transition metals, and lanthanoids;
wherein dopant (D^{X+}) is at least one selected from the group consisting of alkaline earth metals, lanthanoids, actinoids, transition metals, post-transition metals and metalloids; and
wherein X+ represents the oxidation state of the dopant (D^{X+}).

14. Use according to claim 13, wherein the energy storage system is an alkali-metal ion battery such as beyond lithium ion batteries (Na, K, Ca, Mg, Al, Zn), or lithium-ion battery, or a hybrid alkali-metal ion battery, or a hybrid capacitor.

15. Use according to claim 13 or 14,
wherein the bulk material is a doped multinary nitride of the following formula BN:D^{X+}, wherein the dopant is Si or Ni, or
wherein the bulk material is a doped multinary nitride of the following formula GaN:D^{X+}, wherein the dopant is Zn or Zn and Mg.
